# EUROPEAN PATENT SPECIFICATION

(11) **EP 2 639 039 B1**
(45) Date of publication and mention of the grant of the patent: **11.01.2017**
(21) Application number: 12763032.5
(22) Date of filing: 30.03.2012
(51) Int. Cl.: B29C 47/00, B29C 47/08, B29C 47/40, B29C 47/60, B29B 7/48

(54) **SCREW SHAFT STRUCTURE FOR DOUBLE-SHAFT EXTRUDER**
SCHRAUBENWELLENANORDNUNG FÜR ZWEIWELLIGE EXTRUDER
STRUCTURE D'ARBRE À VIS POUR EXTRUDEUSE À ARBRE DOUBLE

(30) Priority: 31.03.2011 JP 2011077325
(43) Date of publication of application: 18.09.2013
(73) Proprietor: The Japan Steel Works, Ltd., Tokyo 141-0032 (JP)
(72) Inventor: HAMADA, Takuya, Hiroshima-shi Hiroshima 736-8602 (JP); WATADA, Satoru, Hiroshima-shi Hiroshima 736-8602 (JP)
(74) Representative: Regimbeau
(86) International application number: PCT/JP2012/058530
(87) International publication number: WO 2012/133742

(56) References cited:
- EP-A2- 0 264 665
- DE-A1-102005 010 315
- JP-A- 5 220 815
- JP-A- 2000 301 590
- JP-A- 2005 022 091
- JP-A- 2011 189 550
- JP-B1- 2 877 791
- JP-Y2- 8 001 048
- JP-Y2- 8 001 048
- US-A- 4 202 633
- US-A- 4 527 899
- US-A1- 2009 213 681

## Description

### Technical Field

The present invention relates to a screw shaft structure for a twin screw extruder, and more particularly, to a novel improvement for reducing a weight of a raw material, which is used for manufacturing a screw shaft, by combining a tapered section and a tapered ring as a structure of a flange section.

### Background Art

As a conventionally used screw shaft structure for a twin screw extruder of this type, the structure disclosed in Patent Literature 1 may be taken as an example.

That is, the above-mentioned screw shaft structure of Patent Literature 1 is configured as illustrated in FIGS. 4 and 5.

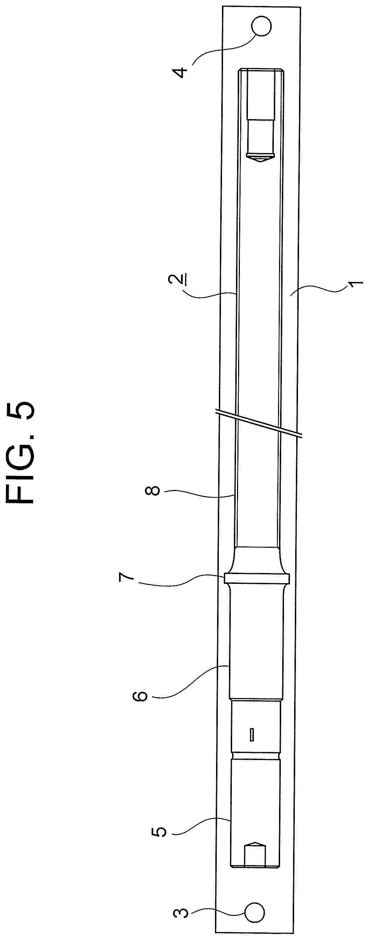

Specifically, in FIG. 5, reference symbol 1 represents a screw shaft raw material to be used for manufacturing a screw shaft 2 through a cutting process. The screw shaft raw material 1 has a pair of suspension holes 3 and 4 provided at both ends thereof, and the screw shaft raw material 1 can be transported through the suspension holes 3 and 4.

From the screw shaft raw material 1, a connection section 5 to be connected to a gear reducer of a drive motor (not shown), a ground section 6 formed integrally with the connection section 5, a flange section 7 formed on a downstream side of the ground section 6, and a screw piece inserting section 8 connected to the flange section 7 and to be used for insertion of a plurality of screw segments are formed through the cutting process.

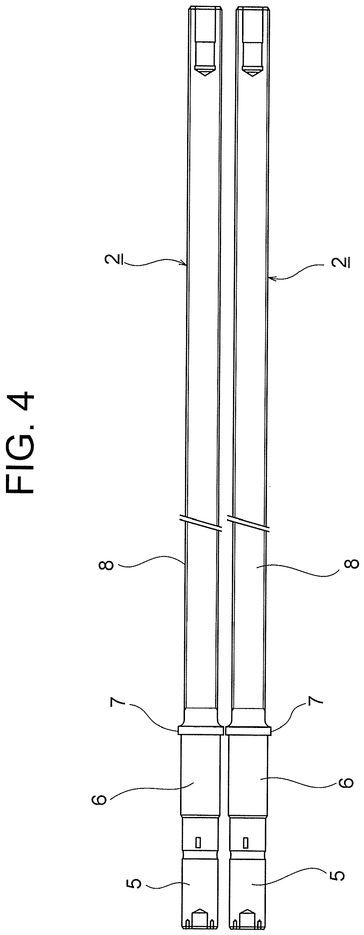

Note that, as illustrated in FIG. 4, two screw shafts 2 are provided in parallel inside a cylinder (not shown) and formed as the twin screw extruder described above.

Besides, Literature 2 describes a device including two screws freely rotatably arranged in connected divided cylinders. When screw shafts screwed in screw holes of slide keys are rotated normally and reversely, the slide keys are linearly moved in the orthogonal direction to the divided cylinder shaft direction along guide recessed parts and accompanied with this, projected line parts inclining to the axial line are slid along inclined key channels formed on divided tapered rings and the divided tapered rings are linearly moved reversely in the axial direction of the divided cylinder. As the result, a gap (a flow path) between tapered parts of the divided tapered ring and the tapered face of a collar-shaped part is changed in a range between the min. gap and the max. gap.

Literature 3 relates to a plant comprising successive regions on along which a mass is conveyed, namely: a first region with a first process chamber in which a mixing of the material takes place and is entered in the mass mechanical and / or thermal energy; a second region with a second process chamber which takes place in a pressure build-up in the mass; and a third region for accommodating the ejectedmass from the second region. Aformingunit (5) is arranged between the second region and the third region comprises, with which the pressurized mass prior to their emission in the third region can be deformed to a particular shape.

Besides, Literature 4 describes a screw shaft joint device of an extruder connecting the output shaft of a gear box transmitting power from a drive source and a screw shaft, an output shaft having a first power transmission means provided to the leading end part thereof, the screw shaft provided with a taper stepped part having a diameter less than that of a shaft having a secondpower transmission means provided to the end part thereof on the side of the output shaft and having a second transmission means provided thereto on the side opposite to the output shaft of the secondpower transmission means; a shaft joint having the output shaft and the screw shaft fitted in both end parts thereof and having a male screw provided to the end part thereof on the side of the screw shaft and at least two slots having a long diameter in the axial direction thereof provided thereto in the circumferential direction thereof at the position opposed to the taper stepped part of the screw shaft, a stopper means preventing the slip-off of the screw shaft from the shaft joint in contact with the taper stepped part of the screw shaft and a nut threaded with the male screw of the shaft joint by its inner diameter part and pressing the stopper means to the taper stepped part of the screw shaft are provided.

### Citation List

### Patent Literature

[PTL 1] JP 2005-22091 A
[PLT 2] JP 2877791 B1
[PLT 3] DE 10 2005 010315
[PLT 4] JP 2000-301590

### Summary of Invention

### Technical Problems

The conventional screw shaft structure for a twin screw extruder is formed as described above, and hence the following problems are inherent therein.

Specifically, the conventional screw shaft 2 includes the flange section 7 that is integrally formed between the ground section 6 and the screw piece inserting section 8, and hence an outer diameter of the flange section 7 is the largest outer diameter of the screw shaft 2.

In contrast, a part having the smallest outer diameter is the screw piece inserting section 8 to be used for insertion of a plurality of screw segments. The screw piece inserting section 8 occupies the largest axial length.

Therefore, as illustrated in FIG. 5, the screw shaft 2 is manufactured through the cutting process from the screw shaft raw material 1 that is formed of an elongated columnar body, and hence an outer diameter of the screw shaft raw material 1 needs to be set equal to or larger than the outer diameter of the flange section 7. When the screw shaft 2 is manufactured from the screw shaft raw material 1 in this state, a large amount of unnecessary portions are generated particularly from the part corresponding to the screw piece inserting section 8 that is smaller in diameter than the flange section 7. Accordingly, such structure is wasteful in terms of cost and raw material, resulting in an increase in weight of the blank relative to a weight of the screw shaft 2 as a final product.

### Solution to Problems

According to the present invention, there is provided a screw shaft structure for a twin screw extruder according to claim 1, comprising at least a connection section to be connected to a gear reducer, a ground section extending distally from the connection section, and a screw piece inserting section extending distally from the ground section, the screw shaft structure for a twin screw extruder further comprising a tapered section provided between the ground section and the screw piece inserting section, the screw shaft structure being characterized in that it further includes a tapered ring fitted onto the tapered section, the tapered ring serving as a flange section, and screw elements to be inserted onto the screw piece inserting section which are positioned and fixed by said tapered ring.

Further, an outer diameter of the tapered section is set equal to or smaller than a ground section outer diameter of the ground section.

### Advantageous Effects of Invention

The screw shaft structure for a twin screw extruder according to the present invention is configured as described above, and hence the following effects can be obtained.

Specifically, in the screw shaft structure for a twin screw extruder, which includes at least the connection section to be connected to a gear reducer, the ground section, and the screw piece inserting section, the tapered section is providedbetween the ground section and the screw piece inserting section, and the tapered ring is fitted onto the tapered section to serve as a flange section. Accordingly, it is only the tapered section that is manufactured from the screw shaft blank at a position between the ground section and the screw piece inserting section. Thus, the outer diameter is reduced as compared to the conventional flange section so that the outer diameter of the screw shaft raw material can be reduced and the weight and shape of the screw shaft raw material can also be reduced. Further, the cost for the raw material and the period of time required for the processing are reduced so that the cost for the processing can be reduced.

Further, as compared actually to the conventional structure, the effect of reducing the weight of the blank is 30%, and the effect of reducing the period of time required for the mechanical processing is 20%.

Thus, the cost reduction including the cost for the rawmaterial and processing is about 40%.

Further, the outer diameter of the tapered section is set equal to or smaller than the ground section outer diameter of the ground section. Accordingly, the largest outer diameter is only the outer diameter of the ground section over the entire length of the screw shaft manufactured from the screw shaft blank. Thus, as compared to the conventional screw shaft, the outer diameter of the screw shaft blank can be reduced, and the cost for the material of the screw shaft raw material can be reduced.

### Brief Description of Drawings

[FIG. 1] A sectional plan view illustrating a screw shaft structure for a twin screw extruder according to the present invention.
[FIG. 2] An enlarged view of the region A of FIG. 1.
[FIG. 3] An explanatory view illustrating a screw shaft raw material in a state in which a single screw shaft of FIG. 1 is subjected to a cutting process.
[FIG. 4] A sectional plan view illustrating a conventional screw shaft structure for a twin screw extruder.
[FIG. 5] An explanatory view illustrating a screw shaft raw material in a state in which a screw shaft of FIG. 4 is subjected to the cutting process.

### Description of Embodiment

The present invention has an object to provide a screw shaft structure for a twin screw extruder, which is capable of reducing a weight of a raw material to be used for manufacturing a screw shaft by combining a tapered section and a tapered ring as a structure of the flange section.

### Embodiment

In the following, a screw shaft structure for a twin screw extruder according to an exemplary embodiment of the present invention is described with reference to the drawings.

Note that, the same components as those of the conventional example or components corresponding thereto are represented by the same reference symbols.

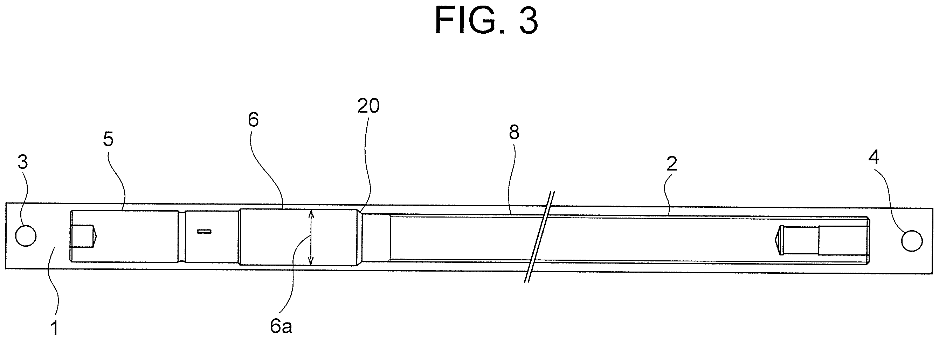

In FIG. 3, reference symbol 1 represents a screw shaft raw material to be used for manufacturing a screw shaft 2 through a cutting process. The screw shaft raw material 1 has a pair of suspension holes 3 and 4 provided at both ends thereof, and the screw shaft raw material 1 can be transported through the suspension holes 3 and 4.

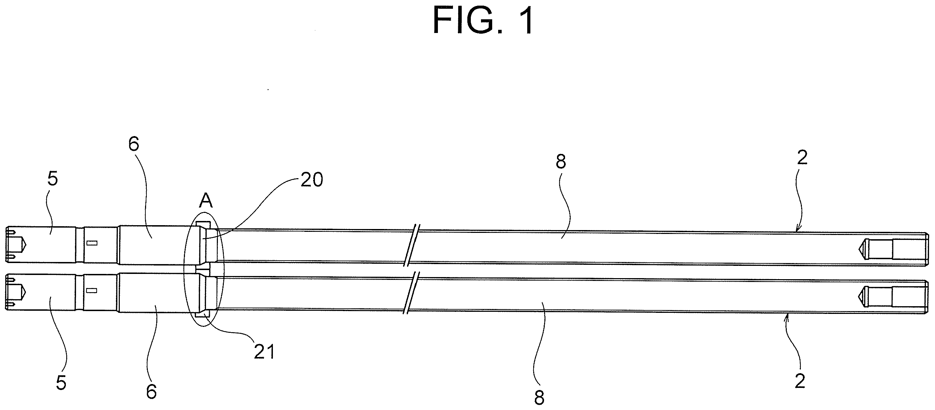

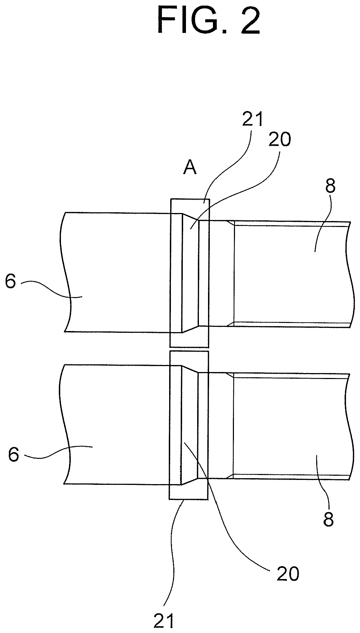

From the screw shaft raw material, a connection section 5 to be connected to a gear reducer of a drive motor (not shown), a ground section 6 formed integrally with the connection section 5, and a tapered section 20 formed on a downstream side of the ground section 6 at a position between the ground section 6 and a screw piece inserting section 8 are formed through the cutting process. Note that, the tapered section 20 is illustrated in the region A of FIG. 1, and is illustrated in FIG. 2 in an enlarged manner.

An outer diameter of the tapered section 20 thus formed is set equal to or smaller than a ground section outer diameter 6a of the ground section 6.

As described above, the outer diameter of the tapered section 20 is set equal to or smaller than the ground section outer diameter 6a, and hence a part of the screw shaft 2 having the largest outer diameter is the part having the ground section outer diameter 6a. As a result, an outer diameter of the screw shaft raw material 1 can be reduced more greatly as compared to the outer diameter of the conventional screw shaft raw material 1, and the weight thereof can also be reduced greatly.

Further, as illustrated in FIGS. 1 and 2, a tapered ring 21 having an inner surface shape conforming to an outer surface shape of the tapered section 20 is fitted onto an outer periphery of the tapered section 20, and screw segments (not shown) to be inserted onto the screw piece inserting section 8 are positioned and fixed by the tapered ring 21 so that an action corresponding to that of the conventional flange section 7 can be obtained. Note that, the tapered section 20 serves as a part on which the tapered ring 21 is fitted, and hence stress concentration is avoided and damage and the like can be prevented.

Thus, the largest outer diameter of the screw shaft 2 is the ground section outer diameter 6a of the ground section 6, and hence, by setting the outer diameter of the screw shaft raw material 1 to be equal to the ground section outer diameter 6a, the screw shaft raw material 1 can be reduced greatly.

### Industrial Applicability

The screw shaft structure for a twin screw extruder according to the present invention is formed of the tapered section and the tapered ring which serve as the conventional flange section. Accordingly, the outer diameter of the screw shaft raw material can be reduced greatly, and the cost required therefor can be reduced greatly.

## Claims

1. A screw shaft structure for a twin screw extruder, comprising at least:
a connection section (5) to be connected to a gear reducer;
a ground section (6) extending distally from the connection section (5); and
a screw piece inserting section (8) extending distally from the ground section (6),
the screw shaft structure for a twin screw extruder further comprising:
a tapered section (20) provided between the ground section (6) and the screw piece inserting section (8);
the screw shaft structure being **characterized in that** it further includes a tapered ring (21) fitted onto the tapered section (20), the tapered ring (21) serving as a flange section, and screw elements to be inserted onto the screw piece inserting section (8) which are positioned and fixed by said tapered ring (21).

2. A screw shaft structure for a twin screw extruder according to claim 1, wherein an outer diameter of the tapered section (20) is set equal to or smaller than a ground section outer diameter (6a) of the ground section (6).

## Patentansprüche

1. Schraubenwellenstruktur für einen Doppelschneckenextruder, umfassend wenigstens:
einen Anschlussabschnitt (5), der an ein Untersetzungsgetriebe anzuschließen ist;
einen Bodenabschnitt (6), der sich distal von dem Anschlussabschnitt (5) erstreckt; und
einen Schraubenstück-Einführabschnitt (8), der sich distal von dem Bodenabschnitt (6) erstreckt,
wobei die Schraubenwellenstruktur für einen Doppelschneckenextruder weiterhin umfasst:
einen verjüngten Abschnitt (20), der zwischen dem Bodenabschnitt (6) und dem Schraubenstück-Einführabschnitt (8) bereitgestellt ist;
wobei die Schraubenwellenstruktur **dadurch gekennzeichnet ist, dass** sie weiterhin einen verjüngten Ring (21) einschließt, der auf dem verjüngten Abschnitt (20) aufgepasst ist, wobei der verjüngte Ring (21) als Flanschabschnitt dient, und Schraubenelemente, die auf denselben Schraubenstück-Einführabschnitt (8) eingefügt sind, die durch den genannten verjüngten Ring (21) positioniert und befestigt sind.

2. Schraubenwellenstruktur für einen Doppelschneckenextruder gemäß Anspruch 1, wobei ein Außendurchmesser des verjüngten Abschnitts (20) gleich oder kleiner eingestellt ist als ein Außendurchmesser (6a) des Bodenabschnitts des Bodenabschnitts (6).

## Revendications

1. Structure d'arbre à vis pour une extrudeuse à double vis, comprenant au moins :
une section de liaison (5) à relier à un réducteur à engrenage ;
une section de masse (6) s'étendant de manière distale depuis la section de liaison (5) ; et
une section d'insertion (8) de pièce vis s'étendant de manière distale depuis la section de masse (6),
la structure d'arbre à vis pour une extrudeuse à double vis comprenant en outre :
une section resserrée (20) située entre la section de masse (6) et la section d'insertion (8) de pièce vis ;
la structure d'arbre à vis étant **caractérisée en ce qu'**elle inclut en outre une bague resserrée (21) installée sur la section resserrée (20), la bague resserrée (21) servant de section de bride, et des éléments vis à insérer sur la section d'insertion (8) de pièce vis qui sont positionnés et fixés par ladite bague resserrée (21).

2. Structure d'arbre à vis pour une extrudeuse à double vis selon la revendication 1, dans laquelle un diamètre extérieur de la section resserrée (20) est défini pour être égal ou inférieur à un diamètre extérieur de section masse (6a) de la section de masse
